# FASCICULE DE BREVET EUROPEEN

(11) **EP 1 065 174 B1**
(45) Date de publication et mention de la délivrance du brevet: **30.03.2005**
(21) Numéro de dépôt: 00401854.5
(22) Date de dépôt: 29.06.2000
(51) Int. Cl.: C03B 37/012, C03B 23/043, C03B 29/00

(54) **Torche à plasma, procédé de fabrication d'une préforme de fibre optique et dispositif de fabrication de préformes mettant en oeuvre ce procédé**
Plasmabrenner, Verfahren zum Herstellen einer Vorform für optische Fasern und Vorrichtung zum Herstellen von Vorformen mittels dieses Verfahren
Plasma burner, method for making an optical preform and apparatus used therefor

(30) Priorité: 01.07.1999 FR 9908457
(43) Date de publication de la demande: 03.01.2001
(73) Titulaire: Draka Comteq B.V., 1018 TX Amsterdam (NL)
(72) Inventeur: Rebreyend, Pierre, 59000 Lille (FR); Dericquebourg, Daniel, 62130 Roelloecourt (FR); Facompre, David, 59800 Lille (FR)
(74) Mandataire: Blokland, Arie

(56) Documents cités:
- EP-A- 0 727 392
- EP-A- 0 887 318

## Description

L'invention concerne une torche à plasma ainsi qu'un procédé de fabrication, et notamment de glaçage de la surface externe d'une préforme en verre et plus particulièrement d'une préforme destinée à être exploitée pour la production d'une fibre optique. Elle concerne aussi un dispositif de fabrication de préformes permettant la mise en oeuvre de ce procédé.

Comme il est connu, la fabrication ou la recharge d'une préforme, destinée à servir à la production d'une fibre optique par étirage, est classiquement réalisée par dépôt de silice en couches concentriques successives sur une préforme primaire et par glaçage de la surface de la couche externe de l'élément d'allure cylindrique ainsi obtenu.

Un procédé connu de fabrication de préforme consiste à partir d'une préforme primaire, d'allure cylindrique, sur laquelle on réalise un dépôt de silice par couches concentriques en chauffant localement la préforme à l'aide de moyens de chauffage inductifs, de type torche à plasma, et en faisant déposer de la silice fondue obtenue à partir de grains de silice injectés dans le plasma à l'embouchure de la torche. Cette silice fondue vient s'incorporer à la silice chauffée à haute température de la zone de surface externe de la préforme qui est alors ciblée par le plasma.

Une partie de la silice ainsi fondue s'évapore en raison des hautes températures atteintes au niveau du plasma et elle tend à se déposer sous forme de suies en se refroidissant. Ces dépôts de suie peuvent être particulièrement gênants car ils affectent notamment les zones extérieures de la préforme qui sont plus froides que la zone ciblée. De tels dépôts sont aussi produits en abondance, lorsque l'une des deux extrémités de la préforme doit être localement chauffée pour pouvoir être coupée et la préforme ainsi obtenue façonnée à l'une de ses extrémités de manière que celle-ci présente une forme pointue d'allure conique qui doit être de même qualité optique que le reste de la préforme, en vue de la production à venir d'une fibre par étirage à chaud.

Il est connu de réaliser un glaçage de la surface externe de la préforme par chauffage de la préforme au moyen de la torche à plasma, dans des conditions correspondant à celles prévues pour le dépôt d'une couche de silice, mais sans réaliser d'apport de silice. Une amélioration de l'état de surface de la préforme est ainsi obtenue par la vitrification, par le plasma, d'une partie des suies présentes sur la préforme. L'action de ce plasma entraîne une évaporation d'une quantité non négligeable de silice du fait du chauffage intense de la zone de surface externe de préforme qui est ciblée. Or comme il est connu, des contraintes technologiques empêchent de réduire la puissance du plasma, comme il serait souhaitable afin d'empêcher une évaporation de silice au cours du glaçage. Il y a donc à nouveau création de suies et celles-ci se déposent à nouveau sur les parties de la préforme qui sont suffisamment froides et notamment sur la portion de surface externe de préforme où l'opération de glaçage vient d'être réalisée. Or les suies restant sur la surface externe d'une préforme constituent un problème important en matière de qualité et elles ont une influence néfaste sur les opérations d'étirage ultérieurement réalisées pour obtenir une fibre.

Il a donc été tenté d'augmenter la vitesse de translation de la préforme par rapport à la torche à plasma pour réduire la production de suies. Cette solution a pour inconvénient d'augmenter les tensions internes que crée inéluctablement le chauffage de la préforme par plasma du fait de sa localisation, à un instant donné, à une zone limitée de la préforme et du fait des variations abruptes de température qui apparaissent alors entre la zone fortement chauffée et les zones voisines de cette préforme. Il est connu d'éliminer les tensions internes apparues dans une préforme par une opération de recuit réalisée dans un four, mais une telle opération est nettement plus longue que la durée d'une opération de glaçage ; il est classiquement prévu qu'elle s'étende sur une durée de l'ordre d'une quinzaine d'heures.

Il est par ailleurs mentionné dans le document EP 0 887 318 A que, pour éviter les problèmes liés à la formation de suies lors de l'opération d'étirage d'une préforme de gros diamètre en une préforme intermédiaire de plus faible diamètre à l'aide d'un chalumeau oxhydrique, on chasse ces suies à l'aide d'un courant de gaz ayant un débit important, de l'ordre de 150 l/min.

Il est connu du document EP 727392 A de chauffer localement une cible avec un plasma ; il n'est pas mentionné de moyens d'injection d'un gaz d'interposition ayant pour effet une diminution de puissance du plasma.

La présente invention a donc pour but de réaliser une torche à plasma permettant notamment d'éviter les dépôts de suies lors du glaçage d'une préforme de fibre optique.
L'invention propose à cet effet une torche à plasma destinée à chauffer localement une cible, **caractérisée en ce qu'**elle comporte des moyens d'injection d'un gaz d'interposition entre le plasma et ladite cible, lesdites moyens d'injection étant mécaniquement fixés par rapport à l'embouchure du conduit d'éjection du plasma hors de la torche à plasma, de manière à diminuer la puissance du plasma au niveau de l'extrémité du plasma.

Le gaz ainsi injecté permet de réduire indirectement la puissance de la torche à plasma, puisqu'il crée une sorte d'écran de gaz entre cette dernière et la cible, cet écran de gaz absorbant une partie de la puissance engendrée par le plasma.

Ainsi, alors qu'il est difficile technologiquement de diminuer la puissance d'une torche à plasma (en général de l'ordre de 38 à 50 kW), l'invention permet de réduire cette puissance indirectement, en agissant sur le plasma lui-même et pas sur les moyens de production de ce dernier.

La présente invention a également pour objet de mettre au point un procédé de fabrication d'une préforme de fibre optique dans lequel le dépôt de suies lors du glaçage est limité par rapport aux procédés connus de l'art antérieur.

L'invention propose à cet effet un procédé de fabrication d'une préforme de fibre optique comprenant une opération de glaçage de la surface externe de ladite préforme à l'aide de moyens de chauffage inductifs, de type torche à plasma, permettant un chauffage localisé de la préforme,
**caractérisé en ce que l'**on interpose un courant de gaz entre le plasma et la préforme au niveau de la zone de la surface externe de cette préforme qui est ciblée par le plasma, de manière à diminuer la puissance du plasma au niveau de cette zone.

Grâce à l'invention, étant donné que la puissance du plasma est diminuée au niveau de la zone de la surface externe ciblée par ce dernier, la production de suies indésirables n'a pas lieu, et la puissance du plasma est juste suffisante pour effectuer l'opération de glaçage sans entraîner d'effets secondaires nuisibles.

Selon un mode de réalisation particulier, le débit du gaz interposé est compris entre 3 et 6 l/min, et de préférence égal à 4 l/min. Un tel débit permet de réduire la puissance du plasma sans déplacer ce dernier, ce qui pourrait entraîner la formation d'un arc électrique.

Selon une caractéristique de l'invention, le gaz d'interposition est constitué par de l'air ou par un gaz neutre.

L'invention propose aussi un dispositif de fabrication d'une préforme de fibre optique comportant :
- des moyens de maintien de la préforme à ses deux extrémités,
- des moyens de chauffage inductifs, de type torche à plasma, permettant un chauffage localisé de la préforme,
- des moyens de mise en rotation de la préforme autour de son axe longitudinal,
- des moyens de déplacement relatif de la préforme par rapport à la torche à plasma parallèlement à l'axe longitudinal,
**caractérisé en ce qu'**il comprend en outre des moyens d'injection d'un gaz d'interposition entre le plasma produit par la torche et la préforme au niveau de la zone de la surface externe de cette préforme ciblée par le plasma.

Selon une caractéristique avantageuse de l'invention, les moyens d'injection de gaz d'interposition comportent une buse d'injection fixe par rapport à la torche à proximité de laquelle elle est positionnée, pour former, conduire et orienter un jet de gaz d'interposition de débit déterminé au niveau de la zone de la surface externe de préforme qui est ciblée par le plasma.

D'autres caractéristiques et avantages de la présente invention apparaîtront dans la description suivante d'un mode de réalisation, donnée à titre illustratif et nullement limitatif, en liaison avec les figures suivantes.

La figure 1 montre un schéma simplifié d'un dispositif de production d'une préforme de fibre optique selon l'invention, prévu pour la mise en oeuvre du procédé selon l'invention.

La figure 2 montre un schéma de principe d'une torche à plasma selon l'invention, mise en oeuvre dans le dispositif de la figure 1.

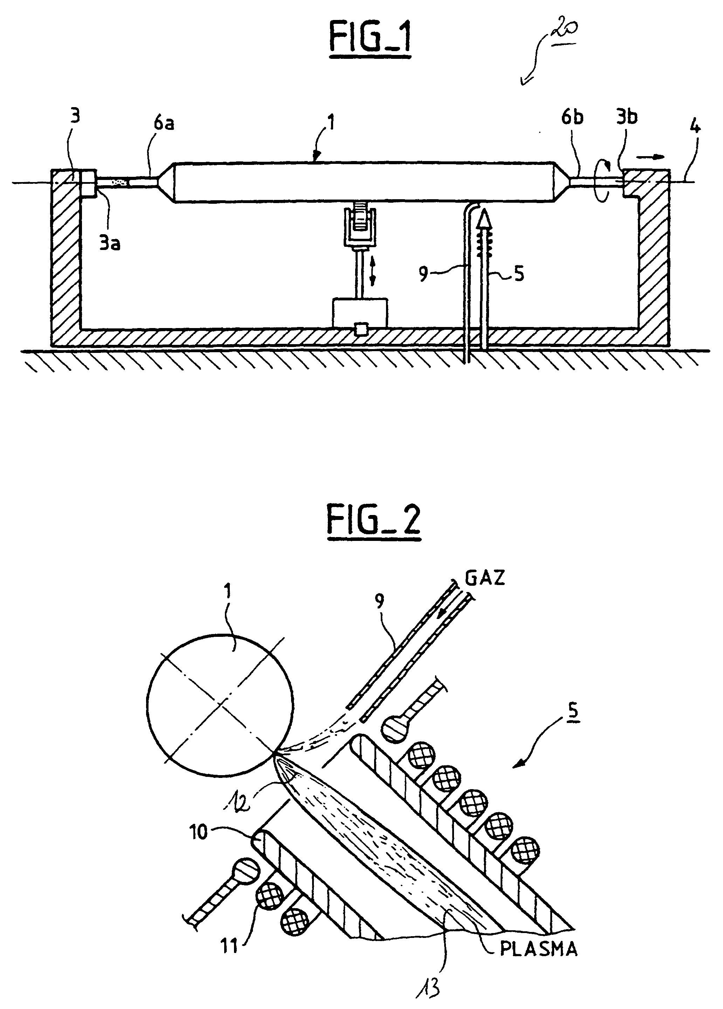

Le dispositif 20 selon l'invention, représenté en figure 1, sert à la fabrication d'une préforme en verre 1, plus particulièrement destinée à être utilisée pour produire de la fibre optique par étirage à chaud. De manière connue, une telle préforme 1 est habituellement obtenue par le dépôt de silice en couches concentriques successives sur une préforme primaire cylindrique (non représentée) d'axe longitudinal 4.

Le dispositif 20 comporte des moyens 3, par exemple un tour de verrier, permettant d'assurer une rotation axiale de la préforme 1 tenue horizontalement à ses extrémités entre deux points de montage 3a, 3b, par l'intermédiaire d'embouts 6a, 6b respectivement, positionnés aux deux extrémités de cette préforme.

Le dispositif 20 comporte aussi des moyens de chauffage inductifs préférablement constitués d'une torche à plasma 5. Cette torche est positionnée radialement et avec précision par rapport à l'axe 4 de la préforme 1, lorsque celle-ci est tenue entre les points de montage 3a, 3b. Ce positionnement est réalisé dans des conditions, connues de l'homme de métier, qui sont choisies telles que l'extrémité du dard 12 (voir figure 2) que forme le plasma 13 soit ciblée sur la surface externe de la préforme 1. Celle-ci est chauffée intérieurement en arrière de la zone de sa surface externe ciblée par le plasma.

Des moyens d'apport de matière, non représentés, sont associés à la torche à plasma ; ils sont classiquement utilisés pour injecter des grains de silice dans le plasma en sortie de torche, où ces grains sont portés en fusion. Un dépôt localisé de silice est donc réalisé sur la zone de la surface externe de la préforme qui est ciblée par le plasma. Des déplacements relatifs en translation entre préforme et torche permettent d'assurer un dépôt de silice sur une zone de largeur limitée sur la longueur de la préforme. Une rotation continue de cette préforme 1 autour de l'axe 4 permet le dépôt d'une couche de silice formant une couverture régulière sur la surface externe de la préforme. La préforme définitive est obtenue par répétition des opérations qui conduit à l'épaississement de cette préforme par dépôts successifs de couches concentriques.

Il est éventuellement envisageable que la torche soit déplacée en translation par rapport à la préforme. Dans une forme préférée et connue de réalisation, la préforme primaire est montée sur un tour 3, comme déjà indiqué plus haut, et celui-ci assure les déplacements en translation de la préforme en cours de fabrication, alors que celle-ci tourne en étant tenue par ses extrémités et que la torche 5 est maintenue fixe, au moins en cours de chauffage, de même que les moyens d'apport de matière.

Selon l'invention, un courant de gaz, tel qu'un courant d'air ou un courant de gaz neutre, comme de l'hélium ou de l'argon, est interposé entre le plasma 13 et la préforme 1 au niveau de la zone de surface externe de préforme qui est ciblée par le plasma, pendant le glaçage de la préforme. Ce courant de gaz est amené à ce niveau par des moyens d'injection (non représentés) se terminant par une buse d'injection 9 qui vient déboucher au niveau de la zone indiquée ci-dessus. Cette buse 9 est mécaniquement fixée par rapport à l'embouchure du conduit 10 d'éjection du plasma hors de la torche 5, à une distance déterminée pour que le gaz éjecté par la buse vienne s'interposer entre la préforme ciblée par l'extrémité du plasma et le dard 12 de ce dernier lorsque la torche est en action.

De manière connue, la zone de surface externe de préforme, ciblée à un instant donné, est chauffée par le plasma centré par l'intermédiaire de la bobine 11 qui entoure le conduit d'éjection 10 de la torche 5. Cette chaleur reçue en surface se diffuse vers l'intérieur de la préforme.

L'interposition de gaz entre le plasma 13 et la surface de la zone ciblée permet de réduire la quantité de chaleur transmise par le plasma en surface de préforme, ce qui équivaut à une réduction de la puissance du plasma, que l'on ne sait pas réaliser autrement à partir du moment où une même torche 5 est exploitée à des fins de chauffage pour les différentes phases de fabrication de la préforme (dépôt, glaçage et séparation des embouts notamment).

La buse d'éjection 9 est positionnée pour obtenir un jet de gaz de forme et de direction déterminée pour une efficacité maximale.

Selon un mode de réalisation préféré de l'invention, le débit de gaz est compris entre 3 et 6 l/min, par exemple de l'ordre de 4 l/min. Un tel débit permet de réduire la puissance du plasma sans déplacer ce dernier, ce qui pourrait entraîner la formation d'un arc électrique.

Cette injection de gaz, dans la zone de surface externe de préforme qui est ciblée par le plasma à un instant donné, permet de choisir les vitesses de rotation et de translation de la préforme qui sont les mieux adaptées à l'obtention des résultats recherchés, soit plus particulièrement à une absence de contraintes internes dans la préforme. De cette manière, il est possible de maintenir des vitesses faibles de déplacement de la préforme, puisque la quantité de chaleur transmise par le plasma à la zone ciblée est réduite par l'interposition de gaz et que les contraintes internes, qui seraient autrement apparues avec le chauffage localisé, peuvent être évitées. Il n'est alors plus nécessaire de prévoir une phase finale d'élimination des contraintes internes par placement de la préforme fabriquée dans un four de recuit pendant une longue période de temps.

Ainsi, en phase de glaçage, la vitesse de rotation peut être comprise entre 35 et 50 tours/min, de préférence voisine de 40 tours/min, et la vitesse de translation peut être comprise entre 25 et 35 mm/min, de préférence voisine de 34 mm/min.

## Revendications

1. Torche à plasma (5) destinée à chauffer localement une cible (1), **caractérisée en ce qu'**elle comporte des moyens (9) d'injection d'un gaz d'interposition entre le plasma (13) et ladite cible (1), lesdites moyens d'injection (9) étant mécaniquement fixés par rapport à l'embouchure du conduit (10) d'éjection du plasma hors de la torche à plasma (5), de manière à diminuer la puissance du plasma au niveau de l'extrémité du plasma.

2. Procédé de fabrication d'une préforme de fibre optique (1) comprenant une opération de glaçage de la surface externe de ladite préforme à l'aide de moyens de chauffage inductifs (5) , de type torche à plasma, permettant un chauffage localisé de la préforme, **caractérisé en ce que** l'on interpose un courant de gaz entre le plasma et la préforme au niveau de la zone de la surface externe de ladite préforme (1) qui est ciblée par le plasma (13), de manière à diminuer la puissance du plasma (13) au niveau de ladite zone.

3. Procédé selon la revendication 2 **caractérisé en ce que** le débit dudit gaz est compris entre 3 et 6 l/min, et de préférence égal à 4 l/min.

4. Procédé selon l'une des revendications 2 ou 3, **caractérisé en ce que** ledit gaz est de l'air.

5. Procédé selon l'une des revendications 2 ou 3, **caractérisé en ce que** ledit gaz est un gaz neutre.

6. Dispositif de fabrication d'une préforme de fibre optique (1) comportant :
• des moyens de maintien (3a, 3b) de ladite préforme à ses deux extrémités,
• des moyens de chauffage inductifs (5), de type torche à plasma, permettant un chauffage localisé de ladite préforme (1),
• des moyens (3) de mise en rotation de ladite préforme (1) autour de son axe longitudinal (4),
• des moyens (3) de déplacement relatif de ladite préforme par rapport à ladite torche à plasma (5) parallèlement audit axe (4),
**caractérisé en ce qu'**il comprend en outre des moyens d'injection (9) d'un gaz d'interposition entre le plasma (13) produit par ladite torche (5) et la préforme (1) au niveau de la zone de la surface externe de cette préforme ciblée par le plasma.

7. Dispositif selon la revendication 6 **caractérisé en ce que** les moyens d'injection (9) dudit gaz comportent une buse d'injection fixe par rapport à la torche (5) à proximité de laquelle elle est positionnée, pour former, conduire et orienter un jet de gaz d'interposition de débit déterminé au niveau de la zone de la surface externe de préforme qui est ciblée par le plasma.

## Patentansprüche

1. Plasmabrenner (5), welcher dazu bestimmt ist, lokal ein Zielobjekt (1) zu erwärmen, **dadurch gekennzeichnet, dass** dieser Mittel (9) zur Injektion eines Zwischengases zwischen das Plasma (13) und das Zielobjekt (1) aufweist, wobei die Mittel zur Injektion (9) bezogen auf die Öffnung des Rohrs (10) zum Auswurf des Plasmas mechanisch außerhalb des Plasmabrenners (5) befestigt sind, um die Stärke des Plasmas auf Höhe des Plasmaendes zu mindern.

2. Verfahren zur Herstellung einer Vorform für optische Fasern (1), welches einen Vorgang der Glanzgebung der Außenfläche der Vorform umfasst unter Zuhilfenahme von Mitteln zur induktiven Erwärmung (5), der Art Plasmabrenner, welche ein lokales Erwärmen der Vorform ermöglichen, **dadurch gekennzeichnet, dass** ein Gasstrom zwischen das Plasma und die Vorform zwischengesetzt wird auf Höhe des Bereichs der Außenfläche der Vorform (1), die Ziel des Plasmas (13) ist, um die Stärke des Plasmas (13) auf Höhe dieses Bereichs zu mindern.

3. Verfahren gemäß Anspruch 2, **dadurch gekennzeichnet, dass** der Durchfluss des Gases zwischen 3 und 6 l/min liegt, und vorzugsweise gleich 4 l/min ist.

4. Verfahren gemäß einem der Ansprüche 2 oder 3, **dadurch gekennzeichnet, dass** das Gas Luft ist.

5. Verfahren gemäß einem der Ansprüche 2 oder 3, **dadurch gekennzeichnet, dass** das Gas ein Neutralgas ist.

6. Vorrichtung zur Herstellung einer Vorform für optische Fasern (1), welche aufweist: Haltemittel (3a, 3b) für die Vorform an ihren beiden Enden,
- Mittel zur induktiven Erwärmung (5), der Art Plasmabrenner, welche eine lokale Erwärmung der Vorform (1) ermöglichen,
- Mittel (3), um die Vorform (1) zum Rotieren um ihre Längsachse (4) zu bringen,
- Mittel (3), um die Vorform in Bezug auf den Plasmabrenner (5) parallel zur Achse (4) zu verschieben,
**dadurch gekennzeichnet, dass** sie des weiteren Mittel zu Injektion (9) eines Zwischengases zwischen das Plasma (13), welches von dem Brenner (5) produziert wird, und die Vorform (1) aufweist auf Höhe des Bereichs der Außenfläche der Vorform, die Ziel des Plasmas ist.

7. Vorrichtung gemäß Anspruch 6, **dadurch gekennzeichnet, dass** die Mittel zu Injektion (9) des Gases eine Einspritzdüse aufweisen, welche bezogen auf den Brenner (5), in dessen Nähe diese angeordnet ist, feststehend ist, um einen Strahl von Zwischengas mit bestimmten Durchfluss zu bilden, zu leiten und auszurichten auf Höhe des Bereichs der Außenfläche der Vorform, welche Ziel des Plasmas ist.

## Claims

1. Plasma torch (5) intended for locally heating a target (1), **characterised in that** the plasma torch comprises injection means (9) for a gas interpositioned between the plasma (13) and said target (1), said injection means (9) being mechanically fixed with respect to the mouth of the plasma outlet channel (10) from the plasma torch (5), so as to reduce the power of the plasma at the extremity of the plasma.

2. Method of producing an optical fibre preform (1), comprising an operation of glazing the external surface of said preform with the aid of inductive heating means (5) of a plasma torch type allowing localised heating of the preform, **characterised in that** a current of gas is interpositioned between the plasma and the preform in the region of the external surface of said preform (1) targeted by the plasma (13), so as to reduce the power of the plasma (13) in said region.

3. Method according to claim 2, **characterised in that** the flow rate of said gas is between 3 and 6 l/min inclusive, preferably 4 l/min.

4. Method according to one of claims 2 or 3, **characterised in that** said gas is air.

5. Method according to one of claims 2 or 3, **characterised in that** said gas is a neutral gas.

6. Device for producing an optical fibre preform (1), comprising:
• means (3a, 3b) for holding said preform at its two extremities,
• inductive heating means (5) of a plasma torch type allowing localised heating of said preform (1),
• means (3) for rotating said preform (1) about its longitudinal axis (4),
• means (3) for relative displacement of said preform with respect to said plasma torch (5) parallel to said axis (4),
**characterised in that** the device additionally comprises injection means (9) for a gas interpositioned between the plasma (13) produced by said torch (5) and the preform (1) in the region of the external surface of said preform targeted by the plasma.

7. Device according to claim 6, **characterised in that** the injection means (9) for said gas comprise an injection nozzle which is fixed with respect to the torch (5), in the vicinity of which it is positioned, for forming, guiding and orienting a jet of interpositioned gas of predetermined flow rate in the region of the external surface of the preform targeted by the plasma.
